(19) Europäisches Patentamt
European Patent Office
Office européen des brevets

(11) **EP 2 599 207 B1**

(12) **EUROPÄISCHE PATENTSCHRIFT**

(45) Veröffentlichungstag und Bekanntmachung des Hinweises auf die Patenterteilung:
**11.03.2020 Patentblatt 2020/11**

(21) Anmeldenummer: **11745691.3**

(22) Anmeldetag: **26.07.2011**

(51) Int Cl.:
**H02M 5/293** *(2006.01)*

(86) Internationale Anmeldenummer:
**PCT/EP2011/003735**

(87) Internationale Veröffentlichungsnummer:
**WO 2012/013329 (02.02.2012 Gazette 2012/05)**

(54) **ZWEI-SCHALTER-UMRICHTER**

DUAL-SWITCH CURRENT CONVERTER

CONVERTISSEUR À DEUX COMMUTATEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2010 DE 102010032696**

(43) Veröffentlichungstag der Anmeldung:
**05.06.2013 Patentblatt 2013/23**

(73) Patentinhaber: **Xylem Water Solutions Herford GmbH**
**32051 Herford (DE)**

(72) Erfinder: **LOESENBECK, Jan, Boris**
**33615 Bielefeld (DE)**

(74) Vertreter: **Lenzing Gerber Stute PartG von Patentanwälten m.b.B.**
**Postfach 20 05 09**
**40103 Düsseldorf (DE)**

(56) Entgegenhaltungen:
**WO-A1-99/55124      AT-B- 401 591**
**AT-B- 408 496      JP-A- 2000 014 157**
**US-A- 5 506 766**

**Beschreibung**

Die vorliegende Erfindung betrifft einen Umrichter zur Erzeugung einer galvanisch getrennten Ausgangsspannung beliebiger Höhe aus einem Dreiphasennetz.

Als Umrichter bezeichnet man mit Leistungselektronik versehene Schaltungen, die je nach Bedarf als Gleichrichter, als Wechselrichter oder zur Umwandlung von Wechselspannungen verschiedener Frequenzen ineinander dienen können.

Bei der Umwandlung aus einem Dreiphasennetz, beispielsweise dem öffentlichen Drehstromnetz, werden üblicherweise Umrichter mit sechs elektronischen Schaltern eingesetzt. Die verwendeten elektronischen Schalter sind in einer Umrichterschaltung die kostspieligsten Bauelemente. Gerade bei Anlagen, in denen eine Vielzahl von elektrischen Verbrauchern über Umrichter angesteuert werden muss, machen die elektronischen Schalter der Umrichter einen wesentlichen Kostenfaktor aus. Ein Beispiel einer solchen Anlage im öffentlichen Bereich ist die Abwasserdesinfektion mittels UV-Strahlung. Wenn hier Niederdruckstrahler eingesetzt werden, sind bei großen Anlagen teilweise über 100 Umrichter erforderlich.

Es besteht deshalb ein Bedarf an preiswerten Umrichtern.

Aus der Patentschrift AT 408 496 B ist ein als Gleichrichter arbeitender Umrichter von der Bauart eines Sperrwandlers bekannt, der mit nur zwei Leistungstransistoren aufgebaut ist. Bauartbedingt ist bei diesem Umrichter der Wirkungsgrad für Anwendungen mit einem hohen Energiebedarf ungünstig niedrig.

Die vorliegende Erfindung hat sich deshalb zur Aufgabe gestellt, einen Umrichter von der Bauart eines Durchflusswandlers zu schaffen, der preiswerter zu fertigen ist, mit weniger elektronischen Schaltern auskommt und vorzugsweise auch noch mehr als einen UV-Strahler in geeigneter Form speisen kann.

Diese Aufgabe wird von einem Umrichter mit den Merkmalen des Anspruchs 1 gelöst.

Weil der Umrichter von der Bauart eines Durchflusswandlers ist und drei Transformatoren mit jeweils zwei gegensinnig gewickelten Primärwicklungen aufweist und weil weiter zwei elektronische Schalter vorgesehen sind, die jeweils eine Primärwicklung der drei Transformatoren über einen Diodensatz ansteuern, kann in Abhängigkeit von der Speisespannung in jedem der drei Transformatoren sekundärseitig eine Sekundärspannung nahezu beliebiger Frequenz und beliebiger Polarität erzeugt werden, wobei die Höhe der erzeugten Spannung von dem Übersetzungsverhältnis des Transformators einerseits und der momentan anliegenden Höhe der Speisespannung andererseits abhängt. Letztere Einschränkung ist für zahlreiche Anwendungen, insbesondere für den Betrieb von Gasentladungslampen, ohne Bedeutung.

Im Gegensatz zu herkömmlichen Um- bzw. Gleichrichtern kommt der Zwei-Schalter-Umrichter mit einem Minimum an Bauelementen aus und weist trotzdem bezüglich der Netzrückwirkungen, des Wirkungsgrads und der Baugröße große Vorteile auf.

Gerade im Hinblick auf den Betrieb von vielen Niederdruckstrahlern im Bereich von jeweils 500W oder den Betrieb von einigen Mitteldruckstrahlern im Bereich von jeweils 10kW bietet dieses Prinzip große Kostenvorteile.

Wenn die Sekundärseite als eine Gleichrichterschaltung ausgeführt ist, können relativ große Leistungen mit einem kompakten preiswerten Aufbau realisiert werden.

Wenn schließlich Umrichter die Sekundärseite zum Betrieb eines auf dem Prinzip der stillen Entladung basierenden, eine im wesentlichen kapazitive last darstellenden Ozonerzeugers eingerichtet ist, kann dieser sehr effektiv betrieben werden. Die elektrischen Verluste und die Umrichterkosten sind gegenüber den für den Betrieb von Ozonerzeugern bekannten Umrichtern erheblich geringer.

Nachfolgend werden Ausführungsbeispiele der vorliegenden Erfindung anhand der Zeichnung beschrieben. Es zeigen:

Figur 1:   Die prinzipielle Schaltung des Umrichters an der Primärseite;

Figur 2:   Einen möglichen Verlauf der Ansteuersignale und der Transformatorprimärspannung in der Schaltung gemäß Fig. 1;

Figur 3:   Eine Schaltung des Umrichters mit einer Sekundärseite, die für den Betrieb von drei Gasentladungslampen an einem Umrichter eingerichtet ist;

Figur 4:   Die Schaltung gemäß Figur 3 in einem ersten Schaltzustand;

Figur 5:   Die Schaltung gemäß Figur 3 in einem zweiten Schaltzustand;

Figur 6:   Eine anstelle der Lampen aus Fig. 5 einsetzbare Modifikation der Schaltung gemäß Figur 3 mit jeweils einer Zündvorrichtung für die Gasentladungslampen;

Figur 7:     Eine anstelle der Lampen aus Fig. 5 einsetzbare Modifikation der Schaltung nach Figur 6 mit jeweils einer zusätzlichen Heizvorrichtung für jede Gasentladungslampe;

Figur 8:     Ein Beispiel für eine Ausführung des Sekundärbereichs der Transformatoren, mit der sekundärseitig eine galvanisch getrennte Hilfsenergie erzeugt werden kann;

Figur 9:     Eine Schaltung zur Verwendung der Spannung eines Entlastungsnetzwerks als Hilfsspannung beispielsweise für die Zündung von Gasentladungslampen;

Figur 10:    Die Lampenspannung ud1 des Umrichters nach Figur 3 für eine Netzperiode; sowie

Figur 11:    Den Netzstrom des Umrichters nach Figur 3.

Prinzipielle Schaltung und Funktion

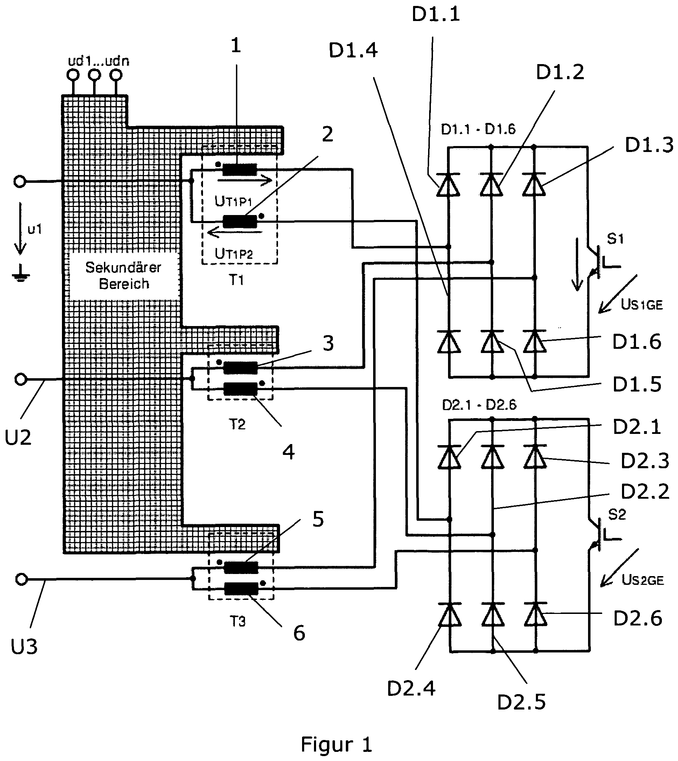

Die prinzipielle Schaltung des neue Umrichters ist in der Figur 1 dargestellt. Die Primärseite des Umrichters ist mit einer dreiphasigen Eingangsspannung U1, U2 und U3 verbunden. Der über Transformatoren T1, T2 und T3 galvanisch entkoppelte Sekundärbereich ist nur als Block dargestellt. Mögliche Ausführungen des sekundären Bereichs werden weiter unten beschrieben.

Nachfolgend wird die Schaltung nun am Beispiel des Pfades der Eingangsspannung U1 beschrieben. Die Eingangsspannung U1 liegt an dem Transformator T1 primärseitig an. Der Transformator T1 weist eine erste Primärwicklung 1 und eine zweite Primärwicklung 2 auf. Die Primärwicklungen 1 und 2 sind gegensinnig gewickelt. Der Wicklungsanfang der Primärwicklung 1 ist mit dem Wicklungsende der Primärwicklung 2 verbunden. Der andere Anschluss der Primärwicklung 1 ist an ein Diodenpaar D1.1 und D1.4 angeschlossen. Die Dioden D1.1 und D1.4 wiederum sind an die beiden gesteuerten Anschlüsse des Schalters S1 angeschlossen. Die primärseitige Wicklung 2 des Transformators T1 ist mit dem zweiten Anschluss an ein zweites Diodenpaar D2.1 und D2.4 angeschlossen. Die Dioden D2.1 und D2.4 wiederum sind an die beiden geschalteten Anschlüsse des Schalters S2 angeschlossen.

Entsprechend ist der Transformator T2 eingangsseitig mit der Eingangsspannung U2 beaufschlagt. Auch der Transformator T2 weist eine erste Primärwicklung 3 und eine zweite Primärwicklung 4 auf, die gegensinnig zu der ersten Primärwicklung 3 gewickelt ist. Die erste Primärwicklung 3 ist mit dem zweiten Anschluss an ein Diodenpaar D1.2 und D1.5 angeschlossen. Dieses Diodenpaar ist wiederum mit den geschalteten Anschlüssen des Schalters S1 verbunden. Die zweite Wicklung 4 des Transformator T2 ist mit einem Diodenpaar D2.2 und D2.5 verbunden. Die Dioden wiederum sind mit den geschalteten Anschlüssen des Schalters S2 verbunden.

Der dritte Transformator T3 ist wie die beiden vorherigen Transformatoren mit einer ersten Wicklung 5 und einer zweiten, gegensinnig gewickelten Wicklung 6 versehen. Die Wicklung 5 ist mit einem Diodenpaar D1.3 und D1.6 verbunden. Der Transformator 3 ist mit seiner zweiten Wicklung 6 mit einem Diodenpaar D2.3 und D2.6 verbunden.

Im primären Bereich sind also die beiden gegensinnigen Primärwicklungen jeweils eingangsseitig mit der jeweiligen Eingangsspannung verbunden. Ausgangsseitig ist je eine Primärwicklung einem Brückenzweig einer ungesteuerten B6-Brücke zugeordnet. Die beiden ungesteuerten B6-Brücken wiederum werden durch jeweils einen Schalter S, der hier als IGBT (Insulated Gate Bipolar Transistor) ausgeführt ist, gleichstromseitig abgeschlossen.

Im sekundären Bereich kann die dreiphasige Eingangsspannung U1 bis U3 in beliebig viele galvanisch getrennte Ausgangsspannungen ud1 bis udn umgewandelt werden.

Mit Hilfe der Schalter S1 und S2 und der Dioden D1.1 bis D2.6 wird in den Transformatoren T1 bis T3 das zur Energieübertragung benötigte Wechselfeld erzeugt.

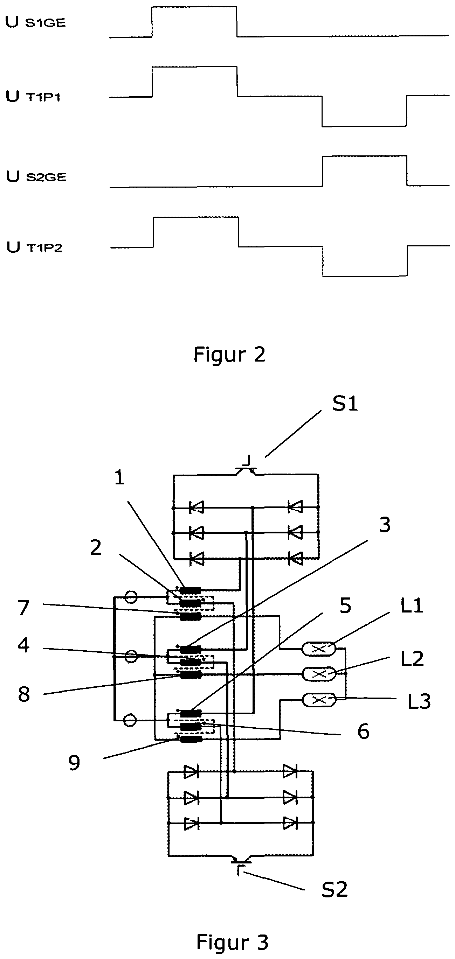

Ein beispielhafter Verlauf der Ansteuersignale US1GE und US2GE für die Schalter S1 und S2 und der resultierende Verlauf der beiden Transformatorprimärspannungen von Transformator T1 sind in Figur 2 dargestellt. Die zeitversetzten Ansteuersignale steuern die über den getrennten Primärseiten des Transformators T1 liegenden Spannungen UT1P1 und UT1P2. Aus diesen folgt das magnetische Wechselfeld, mit dessen Hilfe die Energie in den sekundären Bereich übertragen wird. Der Energiefluss kann beispielsweise mit Hilfe einer Pulsweitenmodulation gesteuert werden.

Beispiele für die Ausführung des sekundären Bereichs

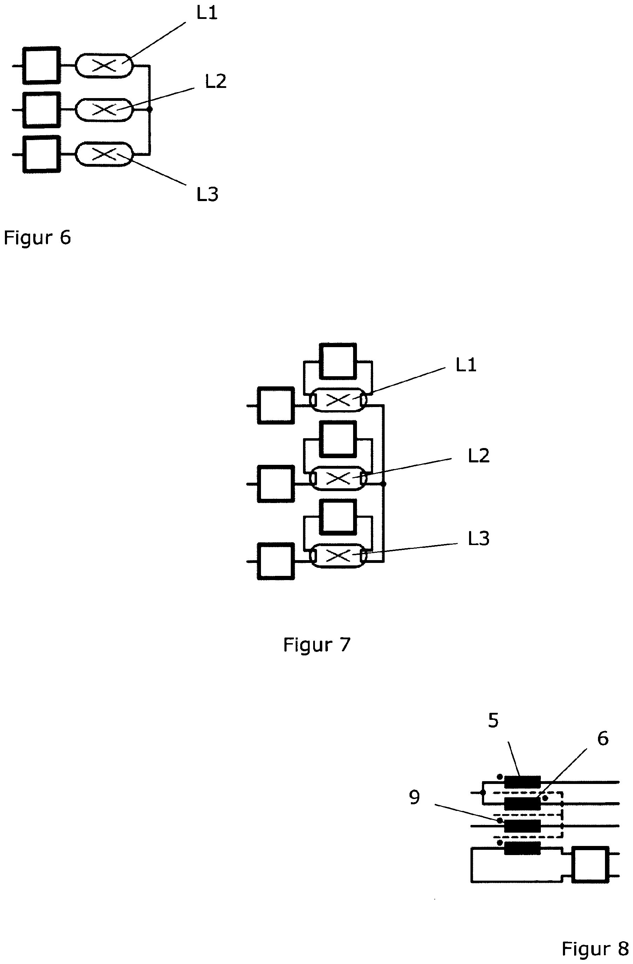

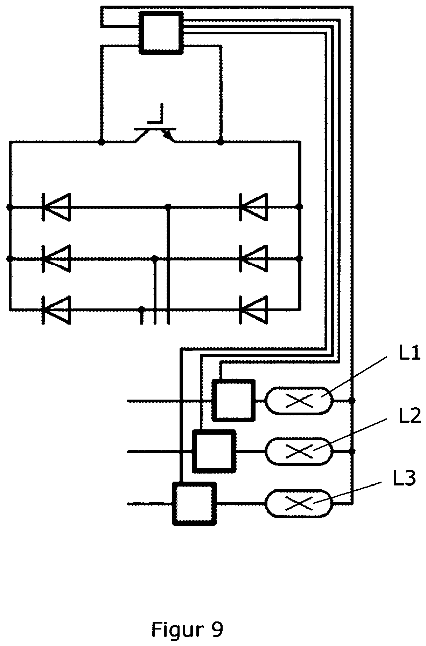

Die Energie kann zur weiteren Nutzung sekundärseitig unterschiedlich weiterbehandelt werden, beispielsweise zur Speisung von drei Lampen, wie in Figur 3 prinzipiell abgebildet. Die drei im Stern geschalteten Lampen L1, L2 und L3 werden durch drei ebenfalls im Stern geschaltete Sekundärwicklungen 7, 8 und 9 gespeist. Die Figuren 6 bis 9 stellen beispielhafte Modifikationen der prinzipiellen Schaltung aus Figur 3 dar.

Erläuterung einer beispielhaften Ausführungsform

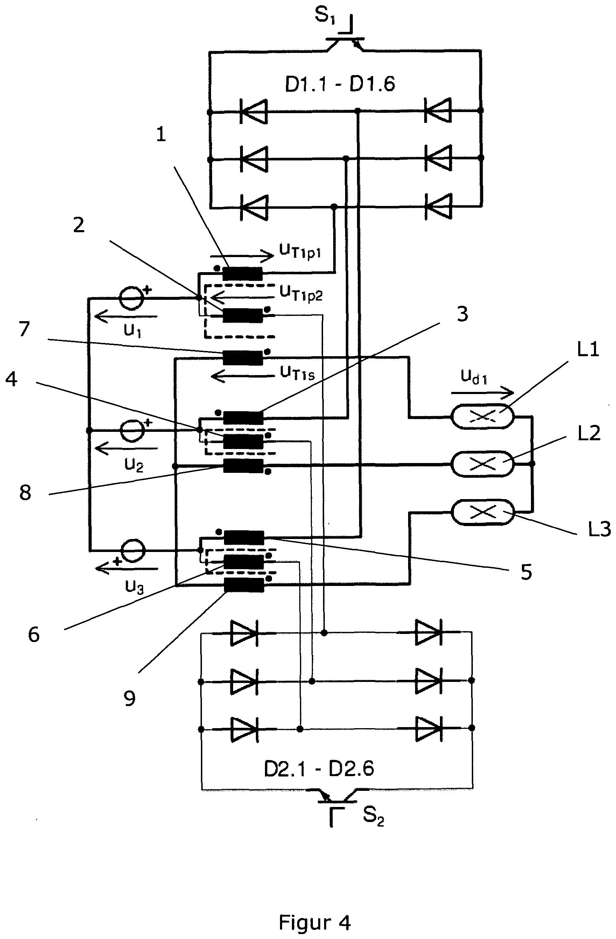

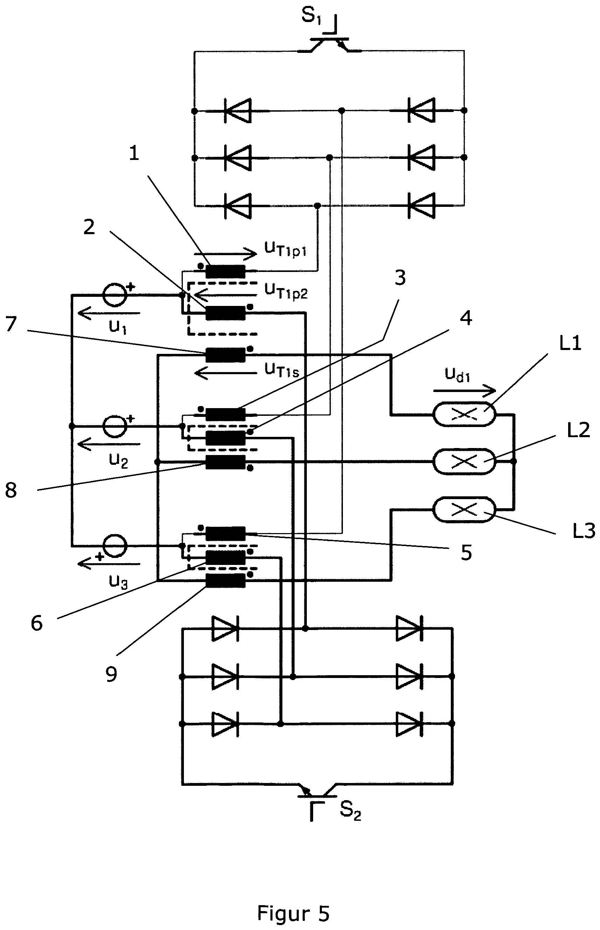

Die Figuren 4 und 5 zeigen den Zwei-Schalter-Umrichter in einer Schaltung zum Betrieb von drei Lampen, beispielsweise in bevorzugten Anwendung zum Betrieb von drei UV-Gasentladungslampen zur Wasser- oder Abwasserbehandlung.

Dabei zeigt die Figur 4 den Schaltzustand a: S1 ist eingeschaltet, S2 ist ausgeschaltet. Die Figur 5 zeigt den Schaltzustand c: S2 eingeschaltet, S1 ausgeschaltet.

Bei der Beschreibung der pulsfrequenten Schaltzustände soll vereinfachend angenommen werden, dass die Netzperiodendauer sehr viel größer als die Pulsperiodendauer ist, die durch die Schaltfrequenz der Schalter S1 und S2 bestimmt ist. Diese Frequenz kann z.B. 1 kHz betragen. Folglich können während einer Pulsperiode die Netzspannungen U1 bis U3 als konstant angenommen werden. Als Beispiel soll hier nun ein Zeitpunkt innerhalb der Netzperiodendauer gewählt werden, zu dem U1 und U2 jeweils positiv sind und U3 negativ ist.

Drei pulsfrequente Schaltzustände a, b und c sind möglich: Während des Schaltzustands a soll der Schalter S1 eingeschaltet und der Schalter S2 ausgeschaltet sein. Während des Schaltzustands b sollen beide Schalter ausgeschaltet sein. Im Schaltzustand c soll schließlich der Schalter S1 ausgeschaltet und der Schalter S2 eingeschaltet sein. Nur während des in Figur 4 abgebildeten Schaltzustands a und während des in Figur 5 dargestellten Schaltzustands c wird Energie auf die Sekundärseiten übertragen. Die stromführenden Pfade in den beiden Figuren sind zur Verdeutlichung jeweils dick ausgeführt. Stromlose Pfade sind mit dünnen Linien dargestellt.

Schaltzustand a: S1 eingeschaltet, S2 ausgeschaltet

Dieser Schaltzustand ist in Figur 4 veranschaulicht. Der geschlossene Schalter S1 sorgt zusammen mit der vorgeschalteten ungesteuerten B6-Brücke dafür, dass sich über der jeweils ersten Primärwicklung der drei Transformatoren T1 bis T3 ein symmetrisches dreiphasiges Spannungssystem mit UT1P1, UT2P1 und UT3P1 ausbildet. Dieses Spannungssystem erscheint nun mit UT1s, UT2s und UT3s transformiert auf den Sekundärseiten der Transformatoren und bildet die symmetrischen Lampenspannungen Ud1, Ud2 und Ud3.

Schaltzustand b: S1 ausgeschaltet, S2 ausgeschaltet

Das System ist stromfrei. Daher haben die Lampenspannungen den Wert Null.

Schaltzustand c: S1 ausgeschaltet, S2 eingeschaltet

Dieser Schaltzustand ist in Figur 5 dargestellt. Hier haben die Schalter S1 und S2 die Rollen getauscht. Im Vergleich zu Schaltzustand a haben die Sekundärspannungen und damit die Lampenspannungen nun das Vorzeichen gewechselt.

Die Folge der Schaltzustände ist a,b,c,b,a,b,c, ..... Die Sekundärspannungen uT1s bis uT3s können mit (1) wie folgt berechnet werden:

$$\begin{pmatrix} u_{T1s} \\ u_{T2s} \\ u_{T3s} \end{pmatrix} = \begin{pmatrix} u_{d1} \\ u_{d2} \\ u_{d3} \end{pmatrix} = \begin{cases} \begin{pmatrix} u_1 \\ u_2 \\ u_3 \end{pmatrix} \dfrac{n_S}{n_p} & \text{Schaltzustand a}: S_1 \text{ eingeschaltet} \\[2em] 0 & \text{Schaltzustand b}: S_1 \text{ und } S_2 \text{ ausgeschaltet} \\[2em] -\begin{pmatrix} u_1 \\ u_2 \\ u_3 \end{pmatrix} \dfrac{n_S}{n_p} & \text{Schaltzustand c}: S_2 \text{ eingeschaltet} \end{cases} \quad (1)$$

wobei ns/np das Verhältnis der Anzahl der Windungen der Sekundärwicklung zu jeder der beiden Primärwicklungen ist. Die Sekundärspannungen sind gleich den jeweiligen Lampenspannungen ud1 bis ud3.

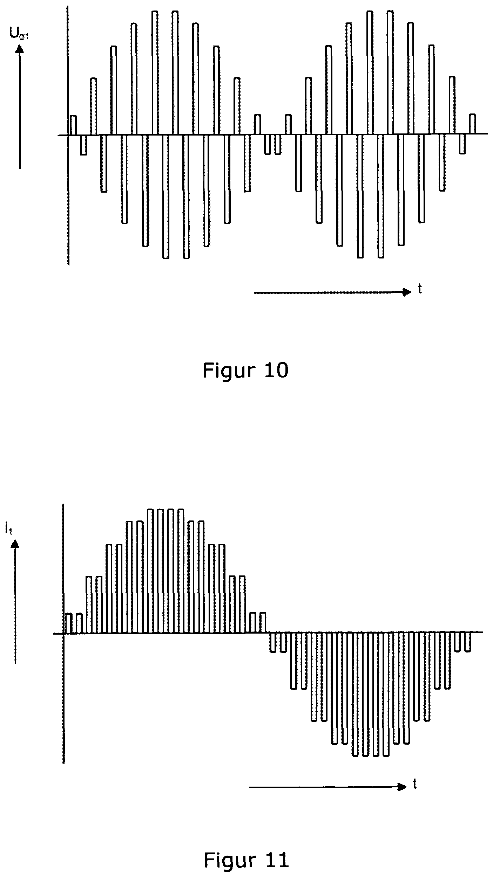

In Figur 10 ist die Lampenspannung ud1 des Zwei-Schalter-Umrichters nach Figur 3 für eine Netzperiode abgebildet. Sie besteht aus pulsfrequenten Blöcken mit jeweils einem positiven und einem negativen Block pro Pulsperiode. Der Betrag des Spitzenwerts des jeweiligen Blocks ist mit dem Faktor ns/np proportional zu dem Betrag der an der Phase anliegenden Netzspannung.

In Figur 11 ist der Netzstrom des Zwei-Schalter-Umrichters nach Figur 3 abgebildet. Er entspricht dem jeweiligen Übertragerprimärstrom Er besteht aus pulsfrequenten Blöcken mit zwei gleichpoligen Blöcken pro Pulsperiode. Der Spitzenwert eines Blocks ist proportional zu der an der Phase anliegenden Netzspannung.

## Patentansprüche

1. Umrichter von der Bauart eines Durchflusswandlers zur Umwandlung einer dreiphasigen Primärspannung (U1, U2, U3) in mehrere Sekundärspannungen (ud1 ... udn), der wenigstens drei Transformatorsekundärwicklungen (7, 8, 9) umfasst, wobei der Umrichter an seiner Primärseite wenigstens drei Transformatoren (T1, T2, T3) mit jeweils zwei gegensinnig gewickelten Primärwicklungen (1,2; 3,4; 5,6;) und jeweils wenigstens einer Sekundärwicklung (7, 8, 9) aufweist, und dass zwei elektronische Schalter (S1, S2) vorgesehen sind, wobei der erste Schalter (S1) jeweils eine Primärwicklung (1, 3, 5) der drei Transformatoren (T1, T2, T3) über einen Diodensatz (D1.1 ... D1.6) ansteuert und wobei der zweite Schalter (S2) jeweils eine andere Primärwicklung (2, 4, 6) der drei Transformatoren (T1, T2, T3) über einen zweiten Diodensatz (D2.1 ... D2.6) ansteuert, **dadurch gekennzeichnet, dass** die Sekundärseite zum Betrieb von drei UV-Gasentladungslampen gleicher Bauart in Sternschaltung eingerichtet ist.

## Claims

1. A current converter of the forward converter type for converting a three-phase primary voltage (U1, U2, U3) into a plurality of secondary voltages (ud1 ... udn), which comprises at least three transformer secondary windings (7, 8, 9), wherein the current converter on its primary side comprises at least three transformers (T1, T2, T3) with respectively two primary windings (1,2; 3,4; 5,6;) wound in opposite directions and respectively at least one secondary winding (7, 8, 9), and two electronic switches (S1, S2) are provided, wherein respectively the first switch (S1) controls a primary winding (1, 3, 5) of the three transformers (T1, T2, T3) via a set of diodes (D1.1 ... D1.6) and wherein the second switch (S2) respectively controls another primary winding (2, 4, 6) of the three transformers (T1, T2, T3) via a second set of diodes (D2.1 ... D2.6), **characterized in that** the secondary side is designed for operating three UV gas discharge lamps of identical construction in a star connection.

## Revendications

1. Convertisseur construit sous la forme d'un convertisseur direct destiné à convertir une tension primaire triphasée (U1, U2, U3) en plusieurs tensions secondaires (udl... udn) qui comporte au moins trois enroulements secondaires de transformateur (7, 8, 9), le convertisseur présentant sur son côté primaire au moins trois transformateurs (T1, T2, T3) ayant chacun deux enroulements primaires (1, 2 ; 3, 4 ; 5, 6) bobinés en sens inverse et à chaque fois au moins un enroulement secondaire (7, 8, 9) et deux commutateurs électroniques (S1, S2) étant également prévus, le premier commutateur (S1) commandant à chaque fois un enroulement primaire (1, 3, 5) des trois transformateurs (T1, T2, T3) par le biais d'un jeu de diodes (D1.1... D1.6) et le deuxième commutateur (S2) commandant à chaque fois un autre enroulement primaire (2, 4, 6) des trois transformateurs (T1, T2, T3) par le biais d'un deuxième jeu de diodes (D2.1... D2.6), **caractérisé en ce que** le côté secondaire est aménagé pour le fonctionnement de trois lampes à décharge gazeuse UV d'une même forme dans un couplage en étoile.

Figur 1

U S1GE

U T1P1

U S2GE

U T1P2

Figur 2

Figur 3

Figur 4

Figur 5

Figur 6

Figur 7

Figur 8

Figur 9

Figur 10

Figur 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 408496 B